(19) Europäisches Patentamt / European Patent Office / Office européen des brevets

(11) **EP 3 922 418 A1**

(12) **EUROPEAN PATENT APPLICATION**
published in accordance with Art. 153(4) EPC

(43) Date of publication:
**15.12.2021 Bulletin 2021/50**

(21) Application number: **19914227.4**

(22) Date of filing: **08.02.2019**

(51) Int Cl.:
**B25J 19/06** (2006.01)    **B25J 13/00** (2006.01)

(86) International application number:
**PCT/JP2019/004710**

(87) International publication number:
**WO 2020/161910 (13.08.2020 Gazette 2020/33)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **NEC Corporation**
**108-8001 Tokyo (JP)**

(72) Inventors:
• **ITOU Takehiro**
  **Tokyo 108-8001 (JP)**
• **OYAMA Hiroyuki**
  **Tokyo 108-8001 (JP)**

(74) Representative: **Betten & Resch**
**Patent- und Rechtsanwälte PartGmbB**
**Maximiliansplatz 14**
**80333 München (DE)**

(54) **CONTROL DEVICE, CONTROL METHOD, AND RECORDING MEDIUM**

(57)    A control device connected to a robot arm with a plurality of joints acquires system information indicating at least a posture state of the robot arm or a drive state of the robot arm. Also, the control device acquires control target information indicating a control target of the robot arm. The control device is configured to calculate, on the basis of the system information, contribution information that is an indicator indicating contribution of the joints to drive of the robot arm on the basis of the control target information. Moreover, the control device is configured to calculate control command information to be used to control driving of each of the joints on the basis of the contribution information.

FIG. 13

**Description**

TECHNICAL FIELD

The present invention relates to a control device, a control method, and a recording medium.

BACKGROUND ART

A control device for a robot controls driving of joint mechanisms provided in the robot such that predetermined parts configuring the robot are caused to move to target positions. As an example of robot control, Patent Document 1 discloses a technique of quickly performing calculation in order to avoid interference with a robot arm. Also, a technique of avoiding collision of body segments with a plurality of degrees of freedom in an articulated system is disclosed in Patent Document 2.

[Prior Art Documents]

[Patent Documents]

[Patent Document 1]
Japanese Unexamined Patent Application, First Publication No. 2017-131990
[Patent Document 2]
Japanese Patent No. 5261495

SUMMARY OF INVENTION

[Problems to be Solved by the Invention]

A control device for a robot as described above may calculate all trajectories of moving parts configuring the robot. The posture of the robot is set by calculating the trajectories of the moving parts such as joints. In a case in which a predetermined part such as a robot joint does not move due to an obstacle or a load when driving of the predetermined part is controlled, it is necessary for the control device to recalculate positions and trajectories of all moving parts again in order to set information of a posture state including the position of each joint of the robot as described above.

Thus, an object of the present invention is to provide a control device, a control method, and a recording medium to solve the aforementioned problem.

[Means for Solving the Problems]

According to a first aspect of the present invention, there is provided a control device that is connected to a robot arm with a plurality of joints, the control device including: a system information acquisition unit that is configured to acquire system information indicating at least a posture state of the robot arm or a driving state of the robot arm; a control target acquisition unit that is configured to acquire control target information indicating a control target of the robot arm; a joint contribution information calculation unit that is configured to calculate, on the basis of the system information, contribution information that is an index indicating contributions of the joints to the driving of the robot arm on the basis of the control target information; and a control command unit that is configured to calculate control command information to be used to control driving of each of the joints on the basis of the contribution information.

According to a second aspect of the present invention, there is provided a control method performed by a control device connected to a robot arm with a plurality of joints, the control method including: acquiring system information indicating at least a posture state of the robot arm and a drive state of the robot arm; acquiring control target information indicating a control target of the robot arm; calculating, on the basis of the system information, contribution information that is an indicator indicating contribution of the joints to driving of the robot arm on the basis of the control target information; and calculating control command information to be used to control driving of each of the joints on the basis of the contribution information.

According to a third aspect of the present invention, there is provided a recording medium recording a program that is configured to cause a control device connected to a robot arm with a plurality of joints to implement: a system information acquisition function of acquiring system information indicating at least a posture state of the robot arm and a drive state of the robot arm; a control target acquisition function of acquiring control target information indicating a control target of the robot arm; a joint contribution information calculation function of calculating, on the basis of the system information, contribution information that is an indicator indicating contribution of the joints to driving of the robot arm on the basis of the control target information; and a control command function of calculating control command information to be used to control driving of each of the joints on the basis of the contribution information.

[Advantageous Effects of the Invention]

According to the present invention, it is possible to cause a predetermined part to move a target position through control of a robot.

BRIEF DESCRIPTION OF DRAWINGS

FIG. 1 is a diagram illustrating an overview of a robot system according to an embodiment of the present invention.
FIG. 2 is a diagram illustrating a hardware configuration of a control device according to the embodiment of the present invention.
FIG. 3 is a functional block diagram of the control device according to the embodiment of the present invention.
FIG. 4 is a first diagram illustrating a processing flow of a control device according to a first embodiment.
FIG. 5 is a first diagram illustrating an operation example of a robot arm according to the first embodiment.
FIG. 6 is a second diagram illustrating an operation example of the robot arm according to the first embodiment.
FIG. 7 is a first diagram illustrating a processing flow of a control device according to a second embodiment.
FIG. 8 is a first diagram illustrating an operation example of a robot arm according to the second embodiment.
FIG. 9 is a second diagram illustrating an operation example of the robot arm according to the second embodiment.
FIG. 10 is a first diagram illustrating a contribution information calculation example according to an embodiment of the present invention.
FIG. 11 is a second diagram illustrating a contribution information calculation example according to the embodiment of the present invention.
FIG. 12 is a third diagram illustrating a contribution information calculation example according to the embodiment of the present invention.
FIG. 13 is a diagram illustrating a minimum configuration of the control device according to the embodiment of the present invention.
FIG. 14 is a diagram illustrating a processing flow of the control device that has a minimum configuration according to the embodiment of the present invention.

EXAMPLE EMBODIMENTS

Hereinafter, a control device according to an embodiment of the present invention will be described with reference to the drawings.

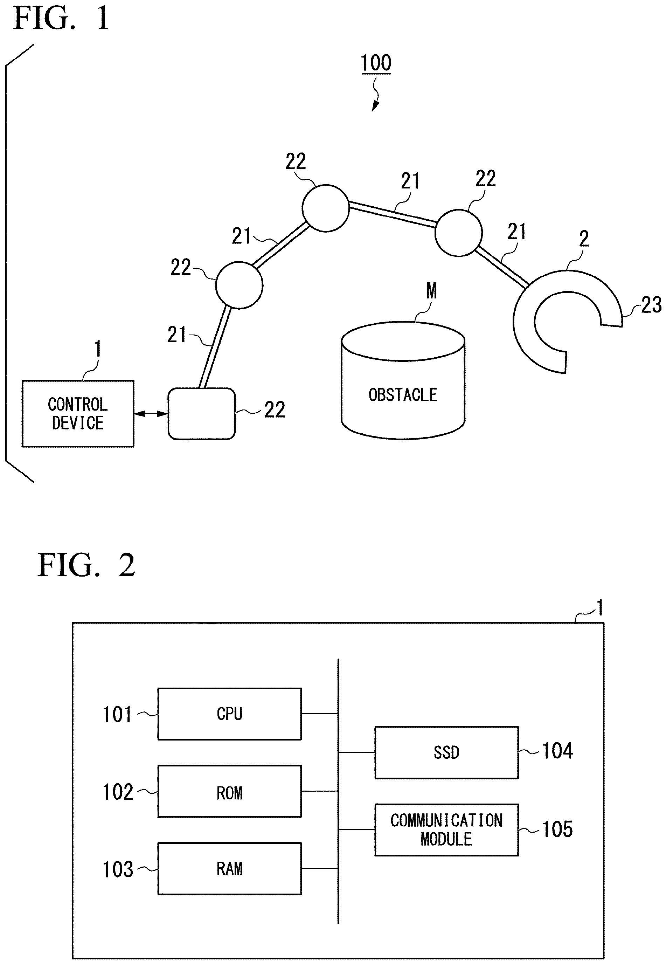

FIG. 1 is a diagram illustrating an overview of a robot system including the control device according to the embodiment.

As illustrated in the drawing, a robot system 100 is configured to include a control device 1 and a robot arm 2. The robot arm 2 includes a plurality of links 21 and joint mechanisms $22(j_i)$ that couple the plurality of links 21 to a coupling target such that the links 21 can freely turn. Note that j in the mention of the joint mechanism $22(j_i)$ denotes the joint mechanism 22 and i denotes a number. In other words, in a case in which the robot arm is configured with n joint mechanisms $22(j_i)$, i = 1, 2, ..., n. The joint mechanisms $22(j_i)$ denote any one or a plurality of joint mechanisms 22 configuring the robot arm 2. The control device 1 controls at least driving of the joint mechanisms $22(j_i)$ of the robot arm 2. In this manner, the control device 1 causes a predetermined part such as the joint mechanisms $22(j_i)$ or an arm tip position to move to a predetermined target position.

Each joint mechanism $22(j_i)$ is configured to incorporate a first rotation motor that causes the coupled link 21 to rotate about an axis of the link 21, a second rotation motor that inclines the link 21 in a perpendicularly intersecting direction that perpendicularly intersects the axis of the link 21 coupled to the joint mechanism $22(j_i)$, and the like. The distal end portion of the robot arm 2 may be provided with a grasping mechanism 23 for grasping an object and the like. Also, the control device 1 is electrically connected to a motor of each joint mechanism $22(j_i)$ and controls driving of the joint mechanism $22(j_i)$.

FIG. 2 is a diagram illustrating a hardware configuration of the control device.

As illustrated in the drawing, the control device 1 is a computer provided with hardware such as a central processing unit (CPU) 101 that is a control unit, a read only memory (ROM) 102, a random access memory (RAM) 103, a solid state drive (SSD) 104, and a communication module 105.

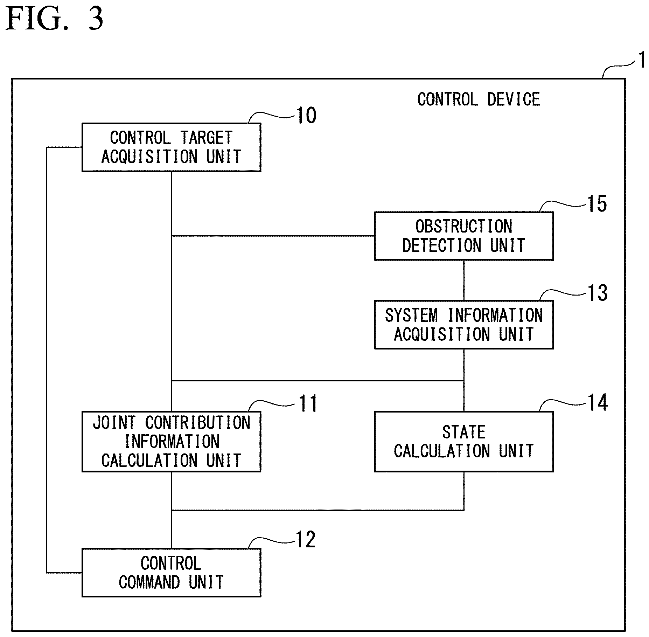

FIG. 3 is a functional block diagram of the control device 1.

The CPU 101 of the control device 1 is activated when power is turned on, and then executes a control program stored in advance. In this manner, the control device 1 exhibits each of functions of a control target acquisition unit 10, a joint contribution information calculation unit 11, a control command unit 12, a system information acquisition unit 13, a state calculation unit 14, and an obstruction detection unit 15.

The control target acquisition unit 10 acquires control target information indicating a control target of the robot arm 2.

The joint contribution information calculation unit 11 calculates contribution information that is an indicator indicating contributions of each joint mechanism $22(j_i)$ to the control target information. The contribution information may be an indicator representing the degree of contribution or may be information representing the presence/absence of a contribution.

The control command unit 12 calculates control command information to be used to control driving of each joint mechanism $22(j_i)$ on the basis of the contribution information.

The system information acquisition unit 13 acquires system information including information indicating a state of the robot system 100 and information on an environment.

The state calculation unit 14 calculates information on a current state regarding the robot arm 2 such as each joint mechanism $22(j_i)$ and arm tip positions using information and the like acquired by the system information acquisition unit 13.

The obstruction detection unit 15 detects the position of an obstacle in the vicinity of each of joint mechanisms $22(j_i)$, the position of an obstacle predicted to enter the vicinity of the joint mechanisms $22(j_i)$, and occurrence of obstruction to the joint mechanism $22(j_i)$. Here, the vicinity means that the distance from the joint mechanism $22(j_i)$ (or the grasping mechanism 23 or the link 21) is equal to or less than a predetermined distance or is less than a predetermined distance.

Through processing of the control device 1 that exhibits each of such functions, it is possible to more flexibly control the robot arm 2 without calculating the entire posture of the robot arm 2 and to cause the distal end portion to move to a target position.

(First embodiment)

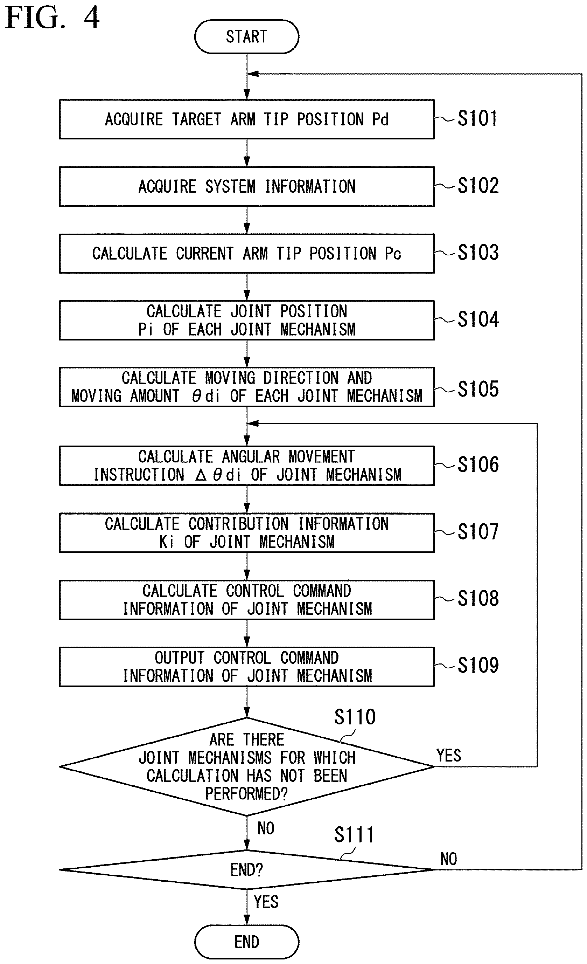

FIG. 4 is a first diagram illustrating a processing flow of a control device according to a first embodiment.

Next, the processing flow of the control device according to the first embodiment will be described in order.

First, if the control command unit 12 of the control device starts control, then the control device provides a command to acquire control target information to the control target acquisition unit 10 and provides a command to acquire system information to the system information acquisition unit 13.

The control target information indicates at least a control target of the robot arm 2. The control target information in one example may be a target arm tip position Pd = {xd, yd, zd} of the robot arm 2. The target arm tip position Pd{xd, yd, zd} indicates three-dimensional coordinates of a movement destination of a current position of the arm tip of the robot arm 2. Alternatively, the control target information may be a target position, a target speed, a target torque, a speed vector, a force vector, or an acceleration vector of a part or a plurality of parts of the links 21. The plurality of parts may be a smaller number of joint mechanisms 22 than the total number of joint mechanisms 22, for example. The control target information may be time-series information of such values.

The system information may include so-called Denavit-Hartenberg (DH) parameters such as a joint angle, an angular speed, a torque, an inter-joint distance, a joint position (coordinates), and a joint attachment angle of each joint mechanism 22, a variable range, and the like. The system information may include information on an obstacle detected by the obstruction detection unit 15. For example, the information on the obstacle may be three-dimensional coordinates indicating the center of the obstacle, three-dimensional coordinates of a discretized surface of the obstacle, vector data of the surface of the obstacle, polygonal approximation data of the surface of the obstacle, functional approximation data of the surface of the obstacle, or the like. Also, coordinates of the robot arm 2 may be included as the information on the obstacle. It is possible to perform control to prevent different positions on the robot arm 2 from coming into contact with each other by the coordinates of the robot arm 2 being included in the information on the obstacle.

Here, the control target acquisition unit 10 acquires the target arm tip position Pd = {xd, yd, zd} in an example (Step S101). Also, the system information acquisition unit 13 acquires, as system information, a joint angle $\theta$ = {$\theta$1, $\theta$2, ...$\theta$n} of each joint mechanism 22, an inter-joint distance (the length of each link 21) l = {l1, l2, ...ln}, and the like.

The state calculation unit 14 acquires the system information from the system information acquisition unit 13 (Step S102). Then, the state calculation unit 14 calculates a current arm tip position Pc (Step S103). The current arm tip position Pc may be calculated from the system information in accordance with forward kinematics, for example. For example, it is possible to obtain the arm tip position if the base point of the coordinates of the robot arm 2 and the Denavit-Hartenberg (DH) parameters are known. Also, the state calculation unit 14 calculates a joint position Pi of each joint

mechanism 22($j_i$) that is one or a plurality of operation targets that can be caused to operate to move the current arm tip position Pc to the target arm tip position Pd (Step S104).

Note that the state calculation unit 14 may acquire a captured image from an external camera adapted to image the robot arm 2 itself and calculate the current arm tip position Pc and the joint position Pi of each joint mechanism 22($j_i$) on the basis of the captured image.

The state calculation unit 14 outputs the current arm tip position Pc and each joint position Pi of the joint mechanism 22($j_i$) that is a current operation target to the joint contribution information calculation unit 11. The joint contribution information calculation unit 11 acquires the system information, the arm tip position Pc, and each joint position Pi that is an operation target.

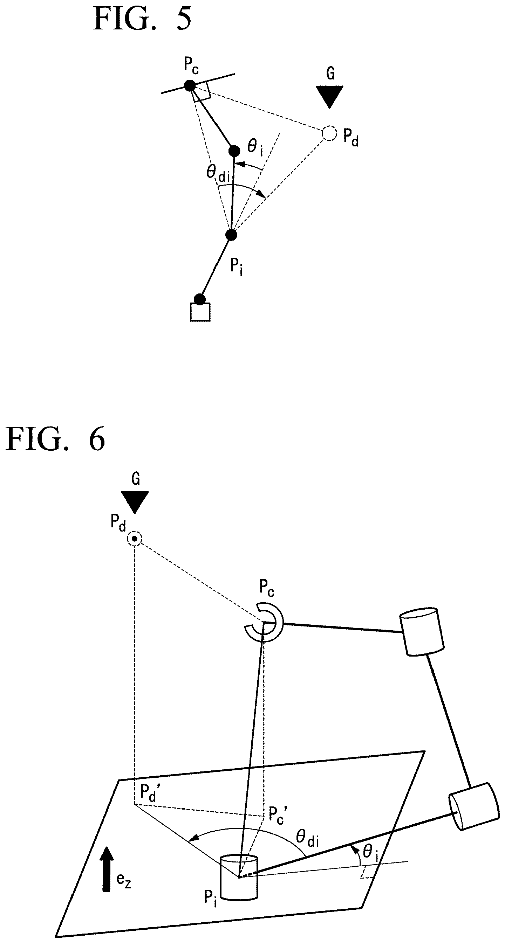

FIG. 5 is a first diagram illustrating an operation example of the robot arm 2 according to the first embodiment.
FIG. 6 is a second diagram illustrating an operation example of the robot arm 2 according to the first embodiment.
FIG. 5 illustrates a case in which the current arm tip position Pc is caused to move to the target arm tip position Pd within a two-dimensional space range in a situation in which the robot arm 2 operates within the two-dimensional space range.
FIG. 6 illustrates a case in which the current arm tip position Pc is caused to move to the target arm tip position Pd within a three-dimensional space range in a situation in which the robot arm 2 operates within the three-dimensional space range.

The joint contribution information calculation unit 11 calculates a moving direction and a moving amount θdi of each joint mechanism 22($j_i$) that is an operation target in a case in which the arm tip position Pc is caused to move to the target arm tip position Pd (Step S 105). For a certain joint mechanism 22($j_i$), for example, the moving direction and the moving amount θdi when a line connecting the joint position Pi of the joint mechanism 22($j_i$) to the arm tip position Pc conforms to a line connecting the joint position Pi of the joint mechanism 22($j_i$) to the target arm tip position Pd are determined. For example, it is possible to obtain θdi using a geometric relationship between Pd, Pi, and Pc. For example, the coordinates are represented by vectors, and θdi is obtained as an angle formed between the vectors represented by Pd-Pi and Pc-Pi. Moreover, it is also possible to obtain θdi using an inner product of the vectors, for example. The joint contribution information calculation unit 11 may obtain the moving direction and the moving amount Δθdi of each joint mechanism 22($j_i$) through simulation processing.

FIG. 6 illustrates an overview of calculation of the moving direction and the moving amount Δθdi of the joint mechanism 22($j_i$) in a case in which the joint mechanism 22($j_i$) operates in directions in three dimensions. As illustrated in FIG. 6, the joint contribution information calculation unit 11 identifies an arm tip projection position Pc' to which the current arm tip position Pc is projected on a plane that perpendicularly intersects the rotational axis of the link 21 connected to the certain joint mechanism 22($j_i$) and passes through the position Pi of the joint mechanism 22($j_i$). Also, the joint contribution information calculation unit 11 calculates the moving amount θdi indicating an angle formed by a line connecting the arm tip projection position Pc' to the joint position Pi of the joint mechanism 22($j_i$) and a line connecting the projection target arm tip position Pd' when the target arm tip position Pd is projected to the plane and the joint position Pi that is a moving target, which is an angle formed by the moving direction of the joint mechanism 22($j_i$). The joint contribution information calculation unit 11 sets a numerical value indicating the joint mechanism 22($j_i$) that is an operation target in i and identifies the joint mechanism 22($j_i$). Also, the joint contribution information calculation unit 11 calculates an angular movement instruction Δθdi of the identified joint mechanism 22($j_i$) by Expression (1) using the moving amount θdi and a gain Gc (Step S106).

$$\Delta \theta d i = G c \cdot \theta d i \quad \cdots (1)$$

Here, in a case in which movement at the same angle is added to a moving direction identified for each joint mechanism 22($j_i$) that is an operation target, the arm tip position Pc significantly varies even if the joint mechanism 22 far from the arm tip position Pc slightly moves. Thus, the joint contribution information calculation unit 11 calculates contribution information ki indicating the degree of contribution of the identified joint mechanism 22($j_i$) to the moving amount when the arm tip position is caused to move from Pc to the target arm tip position Pd as follows on the basis of the current posture of the robot arm 2. When the contribution information ki is calculated, the joint contribution information calculation unit 11 first calculates a Pc-Pi distance di of the identified joint mechanism 22($j_i$) using Expression (2).

$$d i = \sqrt{(P c^2 - P i^2)} \quad \cdots (2)$$

Also, the joint contribution information calculation unit 11 calculates contribution information ki of the identified joint mechanism 22($j_i$) using Expression (3) (Step S107).

$$K i = f (d i) = b \cdot d i \quad \cdots (3)$$

In Expression (3), b denotes a constant. f(di) may be a function of being proportional to a square of the Pd-Pi distance di or may be an arbitrary function using the Pd-Pi distance di as an argument. Alternatively, f(di) may be a polynomial using the distance di as a variable or a trigonometric function, a logarithmic function, or an exponential function, using the distance di as a variable, or an arbitrary function represented by a sum, a product, or a quotient of the aforementioned functions. Also, the contribution information ki may be calculated on the basis of a similar equation using values d'i determined in accordance with the order of the position of each joint mechanism 22($j_i$) in the robot arm 2 (the order of the position from the arm tip or the like) instead of the Pd-Pi distance di. Then, the joint contribution information calculation unit 11 outputs the contribution information ki of each joint mechanism 22 to the control command unit 12.

The control command unit 12 calculates control command information θcontrol(i) on the basis of Expression (4) using the contribution information ki of the identified joint mechanism 22($j_i$) (Step S108). Alternatively, the control command information θcontrol(i) may be an arbitrary function represented by ki and Δθdi.

$$\theta c o n t r o l (i) = k i \cdot \Delta \theta d i \quad \cdots (4)$$

The control command unit 12 outputs the control command information θcontrol(i) to the identified joint mechanism 22($j_i$) (Step S109). The control command unit 12 determines whether or not there are joint mechanisms 22($j_i$) for which control command information has not been calculated from among joint mechanisms 22($j_i$) that are operation targets (Step S110). In a case in which there are joint mechanisms 22($j_i$) for which control command information has not been calculated, the control command unit 12 provides a command to perform processing on the next joint mechanism 22($j_i$) to the joint contribution information calculation unit 11. The joint contribution information calculation unit 11 sets a value indicating the joint mechanism 22($j_i$) for which the contribution information ki has not been calculated from among the joint mechanisms 22($j_i$) that are operation targets to i and repeats the processing from Step S106 for each of minute time periods. In this manner, each joint mechanism 22($j_i$) that is an operation target is operated, and the arm tip position moves to the target arm tip position Pd. The control command unit 12 determines whether or not the arm tip position Pc has reached a final target position and the processing is to be ended (Step Sill). The control device 1 can cause the arm tip position to gradually move and reach the final target position by successively executing the aforementioned processing while gradually shifting the target arm tip position Pd to reach the final arm tip position.

(Second embodiment)

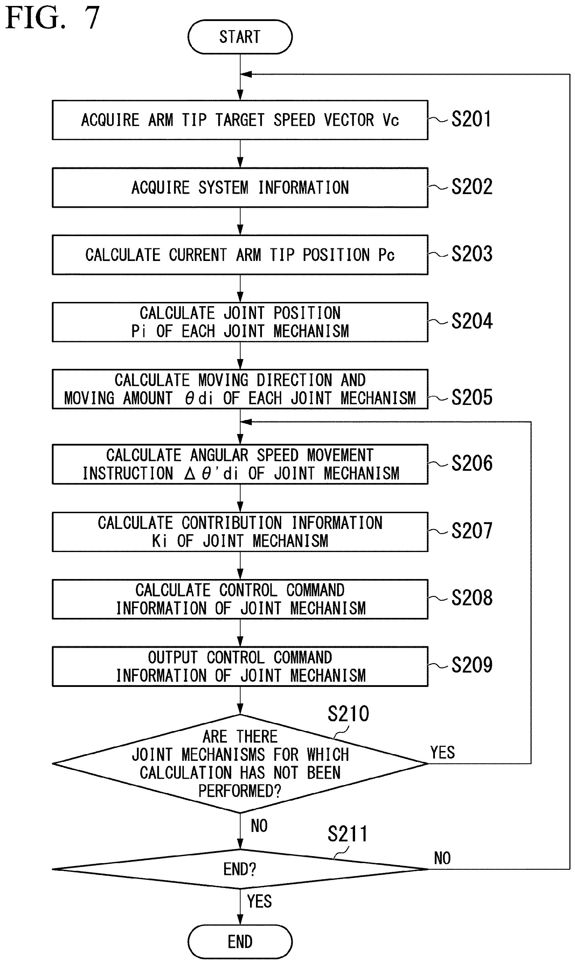

FIG. 7 is a first diagram illustrating a processing flow of a control device according to a second embodiment.

Next, a processing flow of the control device according to the second embodiment will be described in order.

First, if the control command unit 12 of the control device starts control, the control command unit 12 provides a command to acquire control target information to the control target acquisition unit 10 and provides a command to acquire system information to the system information acquisition unit 13.

The control target information indicates at least a control target of a part or a plurality of parts of the robot arm 2. For example, the control target may be an arm tip target speed vector Vc = {vxd, vyd, vzd} of the robot arm 2, The arm tip target speed vector Vc{vxd, vyd, vzd} indicates a speed vector in a three-dimensional space of the arm tip of the robot arm 2. The control target may be a force vector or an acceleration vector instead of the arm tip target speed vector Vc.

The system information may include so-called Denavit-Hartenberg (DH) parameters such as a joint angle, an angular speed, a torque, an inter-joint distance, a joint position (coordinates), and a joint attachment angle of each joint mechanism 22($j_i$), a movable range, and the like. The system information may include information on an obstacle detected by the obstruction detection unit 15. For example, the information on the obstacle may be three-dimensional coordinates indicating the center of the obstacle, three-dimensional coordinates of discretized surface of the obstacle, vector data of the surface of the obstacle, polygonal approximation data of the surface of the obstacle, functional approximation data of the surface of the obstacle, or the like. Also, the information on the obstacle may include coordinates of the robot arm 2. It is possible to perform control to prevent different positions on the robot arm 2 from coming into contact with each other by the coordinates of the robot arm 2 being included in the information on the obstacle.

Here, in one example, the control target acquisition unit 10 acquires the arm tip target speed vector Vc = {vxd, vyd, vzd} (Step S201). Also, the system information acquisition unit 13 acquires system information such as a joint angle θ = {θ1, θ2, ...θn} of each joint mechanism 22($j_i$) and an inter-joint distance (the length of each link 21) l = {l1, l2, ln}.

The state calculation unit 14 acquires the system information from the system information acquisition unit 13 (Step S202). Then, the state calculation unit 14 calculates the current arm tip position Pc (Step S203). The current arm tip position Pc may be calculated from the system information, for example, in accordance with forward kinematics. For example, the arm tip position Pc can be obtained if the base point of the coordinates of the robot arm 2 and the Denavit-Hartenberg (DH) parameters are known. Also, the state calculation unit 14 calculates the joint position Pi of each joint mechanism 22($j_i$) that is one or a plurality of operation targets that can be caused to operate to cause the current arm tip position Pc to move to the target arm tip position Pd (Step S204).

Note that the state calculation unit 14 may acquire a captured image from an external camera adapted to image the robot arm 2 itself and calculate the current arm tip position Pc and the joint position Pi of each joint mechanism 22($j_i$) on the basis of the captured image similarly to the first embodiment.

The state calculation unit 14 outputs the current arm tip position Pc and each joint position Pi of the joint mechanism 22($j_i$) that is a current operation target to the joint contribution information calculation unit 11. The joint contribution information calculation unit 11 acquires the system information, the arm tip position Pc, and the joint position Pi.

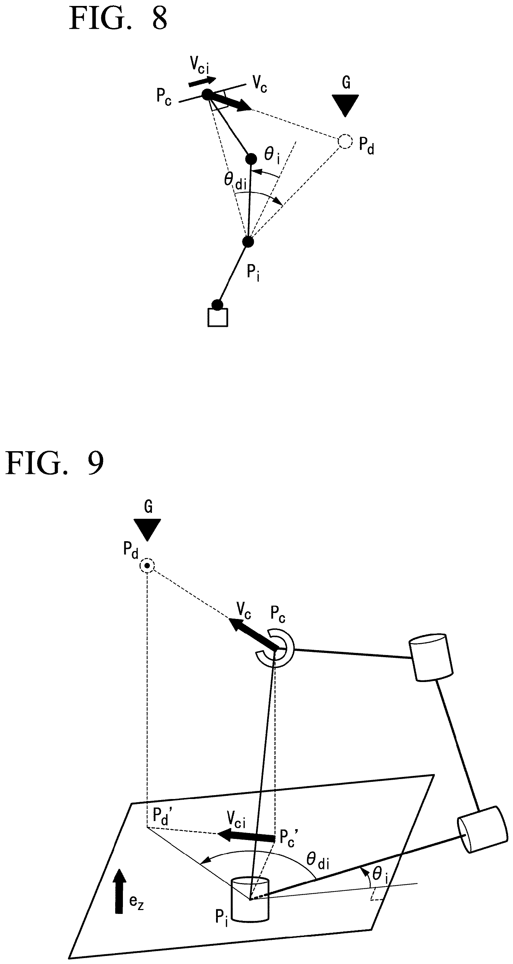

FIG. 8 is a first diagram illustrating an operation example of the robot arm 2 according to the second embodiment. FIG. 9 is a second diagram illustrating an operation example of the robot arm 2 according to the second embodiment.

FIG. 8 illustrates an example of a case in which the current arm tip position Pc is caused to move to the target arm tip position Pd within a two-dimensional space range on the basis of the arm tip target speed vector Vc in a situation in which the robot arm 2 operates in the two-dimensional space range.

FIG. 9 illustrates an example of a case in which the current arm tip position Pc is caused to move to the target arm tip position Pd within a three-dimensional space range on the basis of the arm tip target speed vector Vc in a situation in which the robot arm 2 is operating in a three-dimensional space range.

The joint contribution information calculation unit 11 calculates a moving direction and a moving amount θdi of each joint mechanism 22($j_i$) that is an operation target in a case in which the arm tip position Pc is caused to move to the target arm tip position Pd (Step S205). For a joint mechanism 22($j_i$), for example, the moving direction and the moving amount θdi when a line connecting the joint position Pi of the joint mechanism 22($j_i$) to the arm tip position Pc conforms to a line connecting the joint position Pi of the joint mechanism 22($j_i$) to the target arm tip position Pd are determined. For example, it is possible to obtain θdi using a geometric relationship of Pd, Pi, and Pc. For example, the coordinates are represented as vectors, and θdi is obtained as an angle formed between the vectors represented as Pd-Pi and Pc-Pi. In addition, it is also possible to obtain θdi using an inner product of the vectors, for example. The joint contribution information calculation unit 11 may obtain the moving direction and the moving amount θdi of each joint mechanism 22($j_i$) through simulation processing.

FIG. 9 illustrates an overview of calculation of the moving direction and the moving amount θdi of each joint mechanism 22($j_i$) in a case in which the joint mechanism 22($j_i$) operates in a three-dimensional direction. As illustrated in FIG. 9, the joint contribution information calculation unit 11 identifies an arm tip projection position Pc' to which the current arm tip position Pc is projected on a plane that perpendicularly intersects the rotational axis of the link 21 connected to the certain joint mechanism 22($j_i$) and passes through the position Pi of the joint mechanism 22($j_i$). Then the joint contribution information calculation unit 11 calculates the moving amount θdi indicating an angle that is formed between a line connecting the arm tip projection position Pc' to the joint position Pi of the joint mechanism 22($j_i$) and a line connecting the projection target arm tip position Pd' to which the target arm tip position Pd is projected on the aforementioned plane to the joint position Pi that is a moving target, which is an angle formed by the moving direction of the joint mechanism 22($j_i$).

The joint contribution information calculation unit 11 derives a speed vector component Vci that perpendicularly intersects a straight line connecting the joint position Pi of a certain joint mechanism 22($j_i$) and the arm tip position Pc and has the arm tip position Pc as a base point using the arm tip target speed vector Vc for calculating contribution information of the certain joint mechanism 22($j_i$). The joint contribution information calculation unit 11 sets a numerical value indicating the joint mechanism 22($j_i$) that is an operation target in i and identifies the joint mechanism 22($j_i$). Then, the joint contribution information calculation unit 11 calculates, by Expression (5), the angular speed movement instruction Aθ'di of the identified joint mechanism 22($j_i$) using the speed vector component Vci and the predetermined gain Gc (Step S206).

$$\Delta\theta' di = Gc \cdot (Vci * e\_x) \qquad \cdots (5)$$

In Expression (5), "*" indicates an inner product of the vectors. Also, "e_x" in Expression (5) indicates a unit vector of the speed vector component Vci. Note that the joint contribution information calculation unit 11 derives a force vector component fci that perpendicularly intersects a straight line connecting the joint position Pi of the identified joint mechanism 22(j_i) and the arm tip position Pc and has the arm tip position Pc as a base point using a force vector f for calculating the contribution information of the identified joint mechanism 22(j_i). Then, the joint contribution information calculation unit 11 may calculate the angular speed movement instruction $\Delta\theta'$di on the basis of Expression (6) using the force vector component fci and the predetermined gain Gc. In Expression (6) as well, "*" indicates an inner product of the vectors. Also, "e_x'" in Expression (6) indicates a unit vector of the force vector component fci.

$$\Delta\theta'di = Gc \cdot (fci * e\_x') \qquad \cdots (6)$$

Here, in a case in which control is applied to each joint mechanism 22(j_i) that is an operation target such that each joint mechanism 22(j_i) moves at the same angular speed in the identified moving direction, the arm tip position pc significantly varies even if the joint mechanism 22 that is far from the arm tip position Pc slightly moves. Thus, the joint contribution information calculation unit 11 calculates the contribution information ki indicating the degree of contribution of the identified joint mechanism 22(j_i) to the moving amount when the arm tip position Pc is caused to move to the target arm tip position Pd, on the basis of the current posture of the robot arm 2 (Step S207) as follows.

$$ki = \sqrt{(Pc^2 - Pi^2)} \qquad \cdots (7)$$

Alternatively, it is possible to reduce a control torque of each joint mechanism 22(j_i) that is an operation target by further increasing the moving amount of the joint mechanism 22(j_i) that is close to the arm tip position Pc. In this case, since the joint mechanism 22(j_i) that is an operation target close to the arm tip position Pc further contributes to the movement of the arm tip position Pc, the contribution information ki may be calculated by Expression (8).

$$ki = 1 \div \sqrt{(Pc^2 - Pi^2)} \qquad \cdots (8)$$

Note that "$\sqrt{(Pd^2 - Pi^2)}$" in Expressions (7) and (8) above may be replaced with a function including "$\sqrt{(Pd^2 - Pi^2)}$" as a variable. Then, the joint contribution information calculation unit 11 outputs the contribution information ki of the identified joint mechanism 22 to the control command unit 12.
The control command unit 12 calculates control command information $\theta'$control(i) on the basis of Expression (9) using the contribution information of the identified joint mechanism 22(j_i) (Step S208).

$$\theta'control(i) = ki \cdot \Delta\theta'di \qquad \cdots (9)$$

The control command information $\theta'$control(i) may be an arbitrary function including "ki·$\Delta\theta'$di". The control command unit 12 outputs the control command information $\theta'$control(i) to the identified joint mechanism 22(j_i) (Step S209). The control command unit 12 determines whether or not there are joint mechanisms 22(j_i) for which control command information has not been calculated from among the joint mechanisms 22(j_i) that are operation targets (Step S210). In a case in which there are joint mechanisms 22(j_i) for which control command information has not been calculated, the control command unit 12 provides a command to perform processing on the next joint mechanism 22(j_i) to the joint contribution information calculation unit 11. The joint contribution information calculation unit 11 sets a value indicating the joint mechanism 22(j_i) for which the contribution information ki has not been calculated from among the joint mechanisms 22(j_i) that are operation targets to i and repeats the processing from Step S206 for each minute time. In this manner, each joint mechanism 22(j_i) operates, and the arm tip position moves to the target arm tip position Pd. The control command unit 12 determines whether or not the arm tip position Pc has reached a final target position and the processing is to be ended (Step S211). The control device 1 can gradually moves the arm tip position and cause the arm tip position to reach the final target position by successively executing the aforementioned processing while gradually shifting the target arm tip position Pd such that the arm tip position reaches the final arm tip position.

(Third embodiment)

In the first embodiment and the second embodiment, the contribution information ki is calculated on the basis of the degree of contribution of motion of each joint mechanism $22(j_i)$ that contributes to movement of the target part of the robot arm 2 (arm tip position Pc), which is to be moved to a certain target position, to the target position in the calculation of the contribution information. However, the joint contribution information calculation unit 11 may calculate the contribution information ki indicating the degree of contribution to movement of the target part that is to be moved to the target position on the basis of an indicator indicating easiness of the operation, such as a magnitude of a force when the joint mechanism $22(j_i)$ operates by a predetermined amount or an inertial torque, for calculating the contribution information.

Specifically, the joint contribution information calculation unit 11 calculates, as the contribution information ki, a proportion of an angle θactual(i) by which the joint mechanism $22(j_i)$ has actually operated within a defined control time in response to actual control performed on a joint mechanism 22(J) based on the control command information θcontrol(i) calculated in the first embodiment, on the basis of Expression (10).

$$\mathrm{k\,i = \theta\,a\,c\,t\,u\,a\,l\ (i) \div \theta\,c\,o\,n\,t\,r\,o\,l\ (i)} \quad \cdots (1\,0)$$

In Expression (10) above, the joint contribution information calculation unit 11 may use the control command information θ'control(i) calculated in the second embodiment instead of the control command information θcontrol(i) calculated in the first embodiment. Also, although the contribution information ki calculated in the first embodiment is obtained on the basis of a ratio of the angle θactual(i) by which the joint mechanism $22(j_i)$ has operated within a control time with respect to the control command information θcontrol(i) in Expression (10) above, the contribution information may be calculated on the basis of a difference therebetween or may be an arbitrary function including the ratio or the difference. The joint contribution information calculation unit 11 may use a function including the control command information θcontrol(i) and the angle θactual(i) by which the joint mechanism $22(j_i)$ has operated within the control time for calculating the contribution information ki. Also, the control command unit 12 calculates the control command information θcontrol(i) using the contribution information ki obtained by Expression (10).

Note that the contribution information may be a value obtained by a sum or a product of the contribution information ki calculated in the first embodiment or the second embodiment and the contribution information ki calculated in the third embodiment or a value calculated by a function including the contribution information.

(Fourth embodiment)

The joint contribution information calculation unit 11 may use values of the contribution information ki of a certain joint mechanism $22(j_i)$ itself calculated in the aforementioned embodiments and the contribution information kj of another joint mechanism for calculating the contribution information k'i of the certain joint mechanism $22(j_i)$. For example, it is assumed that contribution information of another j-th joint mechanism $22(J_j)$ is denoted as $k_j$. In this case, the contribution information k'i is calculated by Expression (11) in one example. Another joint mechanism 22(Jj) may be all joint mechanisms 22 configuring the robot arm 2 or may be one or a plurality of joint mechanisms 22 in the vicinity of the joint mechanism 22 that is a target of calculation of the contribution information ki. Note that n in Expression (11) indicates the number of joint mechanisms 22 configuring the robot arm.

$$\mathrm{k'\ i = k\,i - (1 \div (n - 1)\ \Sigma k_j)} \quad \cdots (1\,1)$$

(Fifth embodiment)

Although the exemplary case in which the arm tip position Pc is caused to move to the target arm tip position Pd has been described in the aforementioned embodiments, the control device 1 may perform processing of causing a current position Pe of an arbitrary part of the robot arm 2 to move to the target arm tip position Pd. In this case, the processing may be performed by replacing the arm tip position Pc in the aforementioned processing with the current position Pe of the arbitrary part.

(Sixth embodiment)

In the aforementioned processing, contribution information in which the degree of contribution of a joint mechanism 22 closer to the obstacle is set to be lower may be calculated on the basis of the position of the obstacle that disturbs motion of some joint mechanism 22($j_i$). For example, the obstruction detection unit 15 acquires sensing information from an object detection sensor provided at a predetermined position of the robot arm 2. In a case in which the object detection sensor is a proximity sensor, coordinates of an object are calculated on the basis of the installation position of the proximity sensor, the sensing information form the proximity sensor (the distance to the object), and the like. In a case in which the object detection sensor is a camera, the obstruction detection unit 15 calculates coordinates of the object on the basis of the installation position of the camera and a captured image obtained from the camera. In a case in which the object detection sensor is a distance measurement sensor, the obstruction detection unit 15 calculates coordinates of the object on the basis of the installation position of the distance measurement sensor, sensing information obtained from the distance measurement sensor (the distance to the object, a distance image), and the like. The obstruction detection unit 15 acquires the current position of each joint mechanism 22($j_i$) from the state calculation unit 14. The obstruction detection unit 15 calculates coordinates of each link 21 on the basis of the current coordinates of each joint mechanism 22($j_i$). In a case in which the distance between the position of the link 21 or the joint mechanism 22($j_i$) and the position of the object is equal to or less than a predetermined distance, the obstruction detection unit 15 determines that the object is an obstacle. The obstruction detection unit 15 outputs the position of the obstacle to the joint contribution information calculation unit 11.

The joint contribution information calculation unit 11 calculates a distance dsi between the position of each joint mechanism 22($j_i$) and the position of the obstacle. Then, the joint contribution information calculation unit 11 calculates the contribution information ki using Expression (12) in which the degree of contribution decreases as the distance dsi between the position of the joint mechanism 22($j_i$) and the position of the obstacle is shorter. Note that in Expression (12), the contribution information calculated according to any one of the first to fifth embodiments is defined as Ki using an uppercase letter K.

$$k_i = K_i - f(dsi) \quad \cdots (12)$$

Note that the contribution information ki may be calculated by Expression (13) using the distance dsi between the position of the joint mechanism 22($j_i$) and the position of the obstacle or a function g using the contribution information Ki calculated according to any of the first to fifth embodiments.

$$k_i = g(K_i, \ dsi) \quad \cdots (13)$$

According to the aforementioned processing, there is a likelihood that the robot arm 2 is interfered with obstruction when the robot arm 2 moves in a case in which the obstacle is present in the vicinity of the joint mechanism 22($j_i$). In this case, it is possible to cause the joint mechanism 22($j_i$) that is not present in the vicinity of the obstacle to more largely move to avoid the obstacle and to cause a predetermined part such as the arm tip position Pc to move to the target arm tip position Pd, by calculating the control command information for each joint mechanism 22($j_i$) while setting the degree of contribution of the joint mechanism 22($j_i$) located in the vicinity of the obstacle to be low. In other words, this is an example of a processing aspect in which the joint contribution information calculation unit 11 recalculates the contribution information on the basis of a change in position information of the obstacle.

Note that the obstruction detection unit 15 may detect contact of the obstacle with the joint mechanism 22($j_i$) or the link 21 on the basis of the system information. For example, the system information acquisition unit 13 acquires system information from the sensor of each joint mechanism 22($j_i$) when the robot arm 2 is controlled as described above. The sensor may be a torque sensor, a motor angle sensor, a motor angular speed sensor, or the like. In a case in which the joint mechanism 22($j_i$) is provided with a torque sensor, the system information acquisition unit 13 acquires a torque value as the sensing information from the torque sensor. In a case in which the joint mechanism 22($j_i$) is provided with an angle sensor, the system information acquisition unit 13 acquires a rotation angle from a reference position of each motor included in the joint mechanism 22($j_i$) as the sensing information from the angle sensor. In a case in which the joint mechanism 22($j_i$) is provided with an angular speed sensor, the system information acquisition unit 13 acquires an angular speed of each motor included in the joint mechanism 22($j_i$) as the sensing information from the angular speed sensor. The system information acquisition unit 13 outputs the acquired sensing information to the obstruction detection unit 15.

The obstruction detection unit 15 determines whether or not some obstruction for driving of the joint mechanism 22($j_i$) that is a drive target has occurred, on the basis of a difference between system information indicating a drive state of the joint mechanism 22($j_i$) that is a drive target and control command information for the joint mechanism 22($j_i$) that is a drive target. For example, the control command information includes a torque $\tau_{di}$ of the joint mechanism 22($j_i$) that is a drive target. The obstruction detection unit 15 determines whether or not there is a difference between the torque $\tau_{di}$ designated as a command for the joint mechanism 22($j_i$) that is a drive target and a torque value obtained from the

joint mechanism 22($j_i$) through comparison therebetween. In a case in which there is a difference that is equal to or greater than a predetermined torque value between the torque $\tau_{di}$ designated as a command for the joint mechanism 22($j_i$) that is a drive target and the torque value obtained from the joint mechanism 22($j_i$), the obstruction detection unit 15 determines that some obstruction has occurred in the joint mechanism 22($j_i$). The obstruction detection unit 15 outputs an identifier (ID) or the like of the joint mechanism 22($j_i$) in which the obstruction has occurred to the joint contribution information calculation unit 11. The joint contribution information calculation unit 11 performs updating such that the contribution information ($k_i$) of the joint mechanism 22($j_i$) with the ID decreases. The width by which the contribution information ($k_i$) is caused to decrease may be a value in accordance with how large the difference which is equal to or greater than the predetermined torque value between the torque $\tau_{di}$ designated as a command for the joint mechanism 22($j_i$) that is a drive target and the torque value obtained from the joint mechanism 22($j_i$). Alternatively, the width by which the contribution information ($k_i$) is caused to decrease may be calculated by an arbitrary function including the torque $\tau_{di}$ designated as a command for the joint mechanism 22($j_i$) that is a drive target. The control command unit 12 calculates the control command information on the basis of the new contribution information ($k_i$) of each joint mechanism 22($j_i$).

There may be a case in which the control command information includes an angular speed with respect to each joint mechanism 22($j_i$) and a rotation angle. In this case, the obstruction detection unit 15 determines whether or not there are differences between an angular speed and a rotational angle designated as a command for the joint mechanism 22($j_i$) that is a drive target and an angular speed and a rotational angle obtained from the joint mechanism 22($j_i$) through comparison therebetween. In a case in which there are differences that are equal to or greater than predetermined values between the angular speed and the rotational angle designated as a command for the joint mechanism 22($j_i$) that is a drive target and the angular speed and the rotational angle obtained from the joint mechanism 22($j_i$), the obstruction detection unit 15 determines that some obstruction has occurred in the joint mechanism 22($j_i$). Similarly to the above description, the obstruction detection unit 15 outputs an identifier such as an ID of the joint mechanism 22($j_i$) in which the obstruction has occurred to the joint contribution information calculation unit 11. The joint contribution information calculation unit 11 performs updating such that the contribution information ($k_i$) of the joint mechanism 22($j_i$) with the ID approaches zero, and the control command unit 12 calculates the control command information on the basis of the new contribution information ($k_i$) of each joint mechanism 22($j_i$).

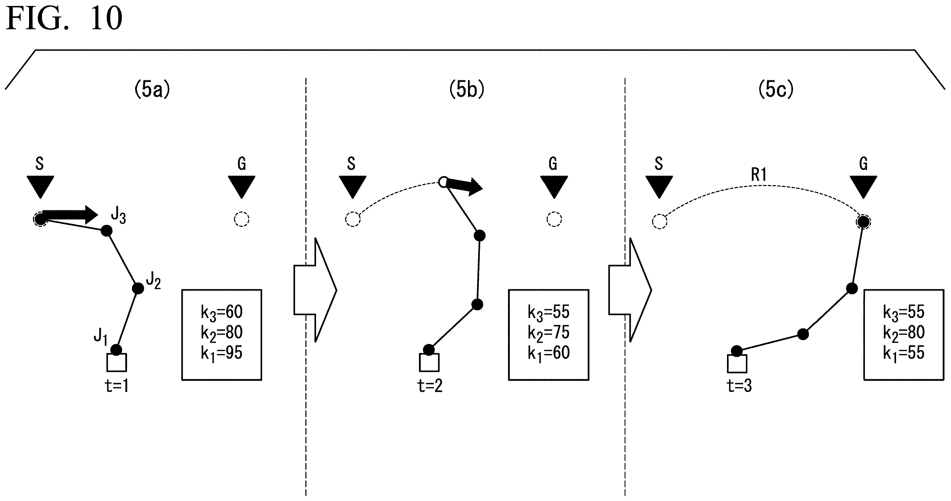

FIG. 10 is a first diagram illustrating a contribution information calculation example.

The robot arm 2 illustrated in FIG. 10 includes each joint mechanism 22 $J_1$, $J_2$, and $J_3$ in order toward the distal end of the robot arm 2. Also, an overview of operations of the robot arm 2 illustrated in FIG. 10 illustrates processing in a case in which the arm tip position is caused to move from a current position S to a target position G. As an example, a case in which contribution information ($k_1$) of the joint mechanism ($J_1$) = 95, contribution information ($k_2$) of the joint mechanism 22($J_2$) = 80, and contribution information ($k_3$) of the joint mechanism 22($J_3$) = 60 is illustrated at a timing (5a) when a clock time t = 1. Also, a case in which the contribution information ($k_1$) of the joint mechanism 22($J_1$) = 60, the contribution information ($k_2$) of the joint mechanism 22($J_2$) = 75, and the contribution information ($k_3$) of the joint mechanism 22($J_3$) = 55 is illustrated at a timing (5b) when the clock time t = 2. Moreover, a case in which the contribution information ($k_1$) of the joint mechanism 22($J_1$) = 55, the contribution information ($k_2$) of the joint mechanism 22($J_2$) = 80, and the contribution information ($k_3$) of the joint mechanism 22($J_3$) = 55 is illustrated at a timing (5c) when the clock time t = 3. When the control device 1 controls the robot arm 2 in this manner, the joint contribution information calculation unit 11 calculates the contribution information ($k_i$) of each joint mechanism 22($J_i$). The value of the contribution information ($k_i$) of each joint mechanism 22($J_i$) varies in accordance with an operation status. A trajectory of the distal end portion of the robot arm 2 when the distal end portion moves from the current arm tip position S to the target position G is the trajectory R1 illustrated in FIG. 10 (5c).

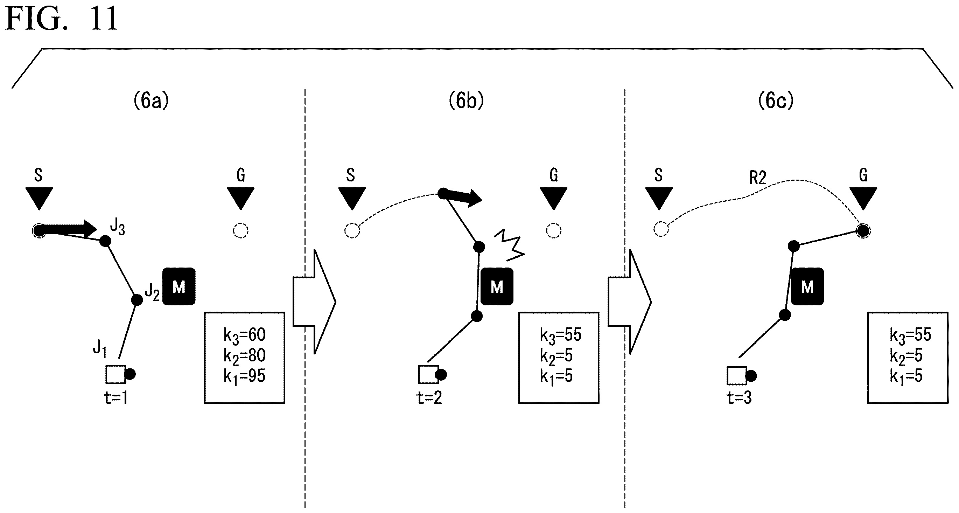

FIG. 11 is a second diagram illustrating a contribution information calculation example.

At the timing when the clock time t = 1, the control device 1 controls the robot arm 2 similarly to FIG. 10. Then, it is assumed that at the timing when the clock time t = 2, the obstruction detection unit 15 detects occurrence of some obstruction due to contact with an object M. In this case, the joint contribution information calculation unit 11 performs updating such that the contribution information ($k_1$) of the joint mechanism 22($Ji$) = 5, the contribution information ($k_2$) of the joint mechanism 22($J_2$) = 5, and the contribution information ($k_3$) of the joint mechanism 22($J_3$) = 55 as illustrated at the timing t = 2 in FIG. 11(6b). The joint contribution information calculation unit 11 performs calculation such that the contribution information ($k_1$) of the joint mechanism 22($J_1$) = 5, the contribution information ($k_2$) of the joint mechanism 22($J_2$) = 5, and the contribution information ($k_3$) of the joint mechanism 22($J_3$) = 55 at the timing t = 3 in FIG. 11 (6c). In this manner, the trajectory when the arm tip position of the robot arm 2 moves from the current position S to the target position G is the trajectory R2 illustrated in FIG. 11 (6c). In other words, the contribution information of the joint mechanism 22($J_2$) that is close to the object M (obstacle) is calculated to be low, and the moving amount of the joint mechanism 22($J_2$) thus becomes small while the moving amount of the joint mechanism 22($J_3$) becomes large. Even if the trajectory changes as the trajectory R2 as compared with the trajectory R1 illustrated in FIG. 10 (5c), it is possible to cause the distal end portion of the robot arm 2 to move to the target position G. Note that each link 21 may be provided with an extension/contraction mechanism that can extend and contract a length, and the control device 1 may be able to control the extension/contraction mechanism of some of the links 21 such that the distal end portion can move to the target position G and change the length thereof.

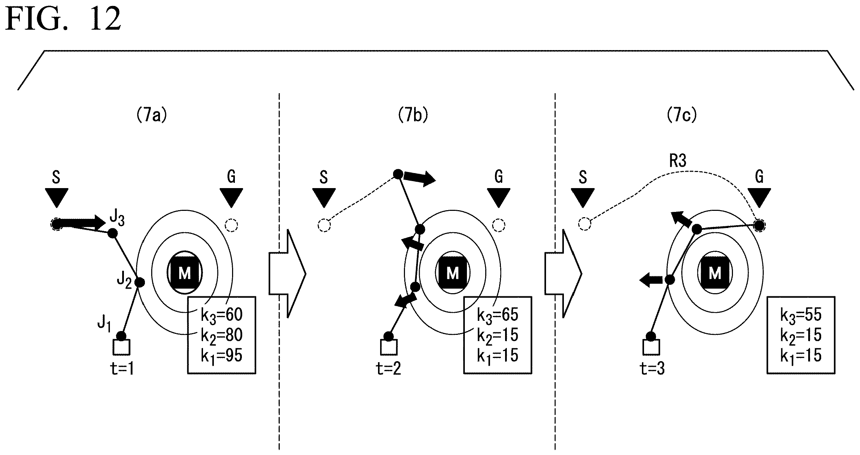

FIG. 12 is a third diagram illustrating a contribution information calculation example.

At the timing when the clock time t = 1, the control device 1 controls the robot arm 2 similarly to FIG. 10. It is assumed that at the timing when the clock time t = 2, the obstruction detection unit 15 detects coordinates of the object M on the basis of information obtained from the camera or the distance measurement sensor. In this case, the control command unit 12 uprates the contribution information ($k_i$) by reducing the value of the contribution information ($k_i$) for the joint mechanism 22 that causes the link 21 to operate or the joint mechanism 22 that approaches the object as the coordinates of the link 21 or the joint mechanism 22 approaches the coordinates of the object. In one example, the joint contribution information calculation unit 11 performs updating such that the contribution information ($k_1$) of the joint mechanism 22($J_1$) = 15, the contribution information ($k_2$) of the joint mechanism 22($J_2$) = 15, and the contribution information ($k_3$) of the joint mechanism 22($J_3$) = 65 as illustrated at the timing t = 2 in FIG. 12 (7b). It is assumed that the joint contribution information calculation unit 11 performs calculation such that the contribution information ($k_1$) of the joint mechanism 22($J_1$) = 15, the contribution information ($k_2$) of the joint mechanism 22($J_2$) = 15, and the contribution information ($k_3$) of the joint mechanism 22($J_3$) = 55 at the timing t = 3 in FIG. 12 (7c), and in this state, the control command unit 12 calculates the control command information and drives the robot arm 2. In this manner, the trajectory when the arm tip position of the robot arm 2 moves from the current position S to the target position G is the trajectory R3 illustrated in FIG. 12 (7c). Even of the trajectory changes as the trajectory R3 as compared with the trajectory R1 illustrated in FIG. 10 (5c) and the trajectory R2 illustrated in FIG, 11 (6c), it is possible to cause the distal end position of the robot arm 2 to move to the target position G. As described above, the link 21 may include the extension/contraction mechanism that can extend and contract the length, and the control device 1 may be able to control the extension/contraction mechanism of some link 21 such that the distal end portion can move to the target position G and change the length thereof.

In the aforementioned example, the exemplary case in which the control device 1 controls driving of the joint mechanisms 22 of the robot arm 2 including the plurality of links 21 and the joint mechanisms 22 that couples the plurality of links 21 to the coupling target such that the links 21 can freely rotate has been described. However, the control device 1 may be adapted to control driving of drive mechanisms for a robot including the plurality of drive mechanisms that can couple a plurality of parts such that a positional relationship therebetween can be moved through processing similar to that described above.

In this case, the control device 1 is connected to the drive mechanisms with a plurality of joints and acquires system information indicating a state of the drive mechanisms and an environment. The control device 1 acquires a control target of predetermined parts such as joints of the drive mechanisms and calculates information indicating degrees of contribution to movement of the predetermined parts to the control target. Then, the control device 1 calculates control command information on the basis of the information indicating the degrees of contribution and controls the drive mechanisms on the basis of the control command information.

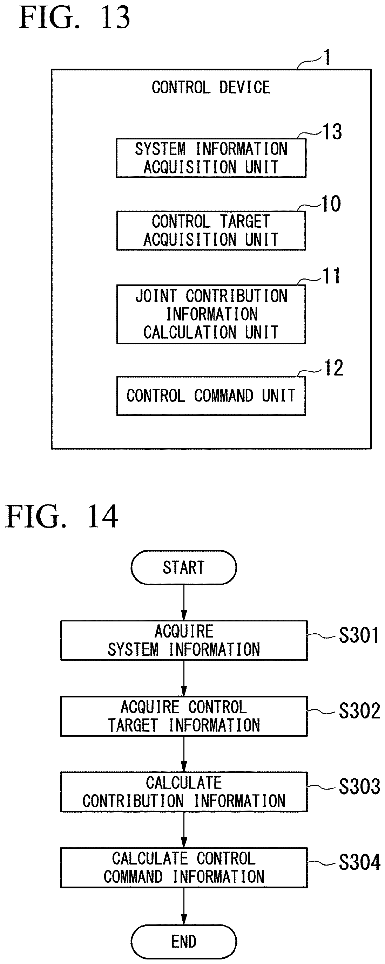

FIG. 13 is a diagram illustrating a minimum configuration of the control device.

FIG. 14 is a diagram illustrating a processing flow of the control device that is a minimum configuration.

The control device 1 connected to the robot arm 2 with the plurality of joints exhibits, at least, functions of the control target acquisition unit 10, the joint contribution information calculation unit 11, the control command unit 12, and the system information acquisition unit 13.

The system information acquisition unit 13 acquires system information indicating at least a posture state of the robot arm 2 or a drive state of the robot arm 2 (Step S301).

The control target acquisition unit 10 acquires control target information indicating the control target of the robot arm 2 (Step S302).

The joint contribution information calculation unit 11 calculates, on the basis of the system information, contribution information that is an indicator indicating contribution of the joints to the driving of the robot arm 2 based on the control target information (Step S303).

The control command unit 12 calculates control command information to be used to control the driving of each joint on the basis of the contribution information (Step S304).

The aforementioned control device 1 has a computer system therein. Also, the aforementioned process of processing is stored in the form of a program in a computer-readable recording medium, and the aforementioned processing is performed by a computer reading and executing the program. Here, the computer-readable recording medium is a magnetic disk, a magneto-optical disc, a semiconductor memory, or the like. Also, the computer program may be distributed to the computer through a communication line, and the computer that has received the distribution may execute the program.

Also, the aforementioned program may be for realizing a part of the aforementioned functions. Further, the aforementioned function may be realized in combination with a program that has already been recorded in the computer system, that is, a so-called differential file (differential program) may be employed.

Although the invention of the present application has been described with reference to the embodiments (and the examples), the invention of the present application is not limited to the aforementioned embodiments (and the examples). Various modifications that can be understood by those skilled in the art can be added to the configurations and the details of the invention of the present application within the scope of the invention of the present application.

[Reference Signs List]

1 Control device
10 Control target acquisition unit
11 Joint contribution information calculation unit
12 Control command unit
13 System information acquisition unit
14 State calculation unit
15 Obstruction detection unit
2 Robot arm
21 Link
22 Joint mechanism

**Claims**

1. A control device that is connected to a robot arm with a plurality of joints, the control device comprising:

   a system information acquisition unit that is configured to acquire system information indicating at least a posture state of the robot arm or a drive state of the robot arm;
   a control target acquisition unit that is configured to acquire control target information indicating a control target of the robot arm;
   a joint contribution information calculation unit that is configured to calculate, on a basis of the system information, contribution information that is an indicator indicating contribution of the joints to driving of the robot arm on a basis of the control target information; and
   a control command unit that is configured to calculate control command information to be used to control driving of each of the joints on a basis of the contribution information.

2. The control device according to claim 1,

   wherein the system information includes position information of an obstacle that disturbs motion of the robot arm, and
   the joint contribution information calculation unit is configured to calculate the contribution information using the position information of the obstacle.

3. The control device according to claim 1 or 2, wherein the joint contribution information calculation unit is configured to calculate the contribution information on the basis of the posture state of the robot arm.

4. The control device according to any one of claims 1 to 3, wherein the joint contribution information calculation unit is configured to calculate the contribution information on the basis of the drive state of the robot arm.

5. The control device according to any one of claims 1 to 4, wherein the joint contribution information calculation unit is configured to recalculate the contribution information on the basis of a change in position information of an obstacle.

6. A control method performed by a control device connected to a robot arm with a plurality of joints, the control method comprising:

   acquiring system information indicating at least a posture state of the robot arm or a drive state of the robot arm;
   acquiring control target information indicating a control target of the robot arm;
   calculating, on a basis of the system information, contribution information that is an indicator indicating contribution of the joints to driving of the robot arm on a basis of the control target information; and

calculating control command information to be used to control driving of each of the joints on a basis of the contribution information.

7. A recording medium recording a program that causes a control device connected to a robot arm with a plurality of joints to implement:

a system information acquisition function of acquiring system information indicating at least a posture state of the robot arm or a drive state of the robot arm;
a control target acquisition function of acquiring control target information indicating a control target of the robot arm;
a joint contribution information calculation function of calculating, on a basis of the system information, contribution information that is an indicator indicating contribution of the joints to driving of the robot arm on a basis of the control target information; and
a control command function of calculating control command information to be used to control driving of each of the joints on a basis of the contribution information.

# FIG. 1

100

CONTROL
DEVICE

M

OBSTACLE

# FIG. 2

1

101 — CPU

102 — ROM

103 — RAM

SSD — 104

COMMUNICATION
MODULE — 105

# FIG. 3

CONTROL DEVICE — 1

CONTROL TARGET ACQUISITION UNIT — 10

OBSTRUCTION DETECTION UNIT — 15

SYSTEM INFORMATION ACQUISITION UNIT — 13

JOINT CONTRIBUTION INFORMATION CALCULATION UNIT — 11

STATE CALCULATION UNIT — 14

CONTROL COMMAND UNIT — 12

# FIG. 4

```
                    ┌──────────┐
                    │  START   │
                    └────┬─────┘
                         │
                         ▼
        ┌────────────────────────────────────┐
        │ ACQUIRE TARGET ARM TIP POSITION Pd  │─ S101
        └────────────────┬───────────────────┘
                         ▼
        ┌────────────────────────────────────┐
        │     ACQUIRE SYSTEM INFORMATION      │─ S102
        └────────────────┬───────────────────┘
                         ▼
        ┌────────────────────────────────────┐
        │ CALCULATE CURRENT ARM TIP POSITION Pc│─ S103
        └────────────────┬───────────────────┘
                         ▼
        ┌────────────────────────────────────┐
        │      CALCULATE JOINT POSITION       │─ S104
        │    Pi OF EACH JOINT MECHANISM       │
        └────────────────┬───────────────────┘
                         ▼
        ┌────────────────────────────────────┐
        │    CALCULATE MOVING DIRECTION AND   │─ S105
        │ MOVING AMOUNT θdi OF EACH JOINT MECHANISM│
        └────────────────┬───────────────────┘
                         ▼
        ┌────────────────────────────────────┐
        │      CALCULATE ANGULAR MOVEMENT     │─ S106
        │  INSTRUCTION Δθdi OF JOINT MECHANISM│
        └────────────────┬───────────────────┘
                         ▼
        ┌────────────────────────────────────┐
        │   CALCULATE CONTRIBUTION INFORMATION│─ S107
        │       Ki OF JOINT MECHANISM         │
        └────────────────┬───────────────────┘
                         ▼
        ┌────────────────────────────────────┐
        │     CALCULATE CONTROL COMMAND       │─ S108
        │    INFORMATION OF JOINT MECHANISM   │
        └────────────────┬───────────────────┘
                         ▼
        ┌────────────────────────────────────┐
        │      OUTPUT CONTROL COMMAND         │─ S109
        │    INFORMATION OF JOINT MECHANISM   │
        └────────────────┬───────────────────┘
                         ▼
                    S110
              ╱ ARE THERE ╲
         ╱ JOINT MECHANISMS FOR WHICH ╲ ── YES
         ╲ CALCULATION HAS NOT BEEN   ╱
              ╲ PERFORMED? ╱
                   │ NO
                   ▼      S111
              ╱   END?   ╲ ── NO
                   │ YES
                   ▼
              ┌──────────┐
              │   END    │
              └──────────┘
```

# FIG. 5

# FIG. 6

FIG. 7

```
                    ┌─────────────┐
                    │    START    │
                    └──────┬──────┘
                           │
        ┌──────────────────▼──────────────────┐
        │ ACQUIRE ARM TIP TARGET SPEED VECTOR Vc │──S201
        └──────────────────┬──────────────────┘
                           │
        ┌──────────────────▼──────────────────┐
        │      ACQUIRE SYSTEM INFORMATION      │──S202
        └──────────────────┬──────────────────┘
                           │
        ┌──────────────────▼──────────────────┐
        │ CALCULATE CURRENT ARM TIP POSITION Pc │──S203
        └──────────────────┬──────────────────┘
                           │
        ┌──────────────────▼──────────────────┐
        │        CALCULATE JOINT POSITION       │──S204
        │    Pi OF EACH JOINT MECHANISM         │
        └──────────────────┬──────────────────┘
                           │
        ┌──────────────────▼──────────────────┐
        │    CALCULATE MOVING DIRECTION AND     │──S205
        │ MOVING AMOUNT θdi OF EACH JOINT MECHANISM │
        └──────────────────┬──────────────────┘
                           │
        ┌──────────────────▼──────────────────┐
        │   CALCULATE ANGULAR SPEED MOVEMENT    │──S206
        │  INSTRUCTION Δθ'di OF JOINT MECHANISM │
        └──────────────────┬──────────────────┘
                           │
        ┌──────────────────▼──────────────────┐
        │    CALCULATE CONTRIBUTION INFORMATION │──S207
        │       Ki OF JOINT MECHANISM           │
        └──────────────────┬──────────────────┘
                           │
        ┌──────────────────▼──────────────────┐
        │       CALCULATE CONTROL COMMAND       │──S208
        │    INFORMATION OF JOINT MECHANISM     │
        └──────────────────┬──────────────────┘
                           │
        ┌──────────────────▼──────────────────┐
        │        OUTPUT CONTROL COMMAND         │──S209
        │    INFORMATION OF JOINT MECHANISM     │
        └──────────────────┬──────────────────┘
                           │          S210
                    ┌──────▼──────┐
                   ╱ ARE THERE     ╲      YES
                  ╱ JOINT MECHANISMS╲──────────┐
                  ╲ FOR WHICH        ╱          │
                   ╲CALCULATION HAS  ╱          │
                    ╲NOT BEEN       ╱           │
                     ╲PERFORMED?   ╱            │
                      └─────┬─────┘             │
                          NO│        S211       │
                    ┌──────▼──────┐             │
                   ╱              ╲     NO       │
                   ╲    END?      ╱─────────────┘
                    └─────┬──────┘
                        YES│
                    ┌──────▼──────┐
                    │     END     │
                    └─────────────┘
```

FIG. 8

FIG. 9

# FIG. 10

| (5a) | (5b) | (5c) |
|---|---|---|
| $k_3=60$ <br> $k_2=80$ <br> $k_1=95$ | $k_3=55$ <br> $k_2=75$ <br> $k_1=60$ | $k_3=55$ <br> $k_2=80$ <br> $k_1=55$ |

EP 3 922 418 A1

FIG. 11

(6a)

(6b)

(6c)

S    G

$J_3$

$J_2$ M

$J_1$

t=1

$k_3=60$
$k_2=80$
$k_1=95$

S    G

M

t=2

$k_3=55$
$k_2=5$
$k_1=5$

S    R2    G

M

t=3

$k_3=55$
$k_2=5$
$k_1=5$

EP 3 922 418 A1

# FIG. 12

(7a)

S    G
▼    ▼

J₃
J₂
J₁
M
t=1

| k₃=60 |
| k₂=80 |
| k₁=95 |

(7b)

S    G
▼    ▼

M
t=2

| k₃=65 |
| k₂=15 |
| k₁=15 |

(7c)

R3

S    G
▼    ▼

M
t=3

| k₃=55 |
| k₂=15 |
| k₁=15 |

# FIG. 13

```
┌─────────────────────────────────────────────┐ ⌐1
│                CONTROL DEVICE                 │
│                                               │
│   ┌─────────────────────────────────┐ ⌐13    │
│   │     SYSTEM INFORMATION           │        │
│   │     ACQUISITION UNIT             │        │
│   └─────────────────────────────────┘         │
│                                               │
│   ┌─────────────────────────────────┐ ⌐10    │
│   │      CONTROL TARGET              │        │
│   │      ACQUISITION UNIT            │        │
│   └─────────────────────────────────┘         │
│                                               │
│   ┌─────────────────────────────────┐ ⌐11    │
│   │     JOINT CONTRIBUTION           │        │
│   │       INFORMATION                │        │
│   │     CALCULATION UNIT             │        │
│   └─────────────────────────────────┘         │
│                                               │
│   ┌─────────────────────────────────┐ ⌐12    │
│   │      CONTROL COMMAND UNIT        │        │
│   └─────────────────────────────────┘         │
│                                               │
└───────────────────────────────────────────────┘
```

# FIG. 14

```
              ┌──────────┐
              │  START   │
              └──────────┘
                   │
                   ▼
        ┌────────────────────────┐
        │        ACQUIRE         │─── S301
        │   SYSTEM INFORMATION   │
        └────────────────────────┘
                   │
                   ▼
        ┌────────────────────────┐
        │    ACQUIRE CONTROL     │─── S302
        │   TARGET INFORMATION   │
        └────────────────────────┘
                   │
                   ▼
        ┌────────────────────────┐
        │       CALCULATE        │─── S303
        │  CONTRIBUTION INFORMATION │
        └────────────────────────┘
                   │
                   ▼
        ┌────────────────────────┐
        │   CALCULATE CONTROL    │─── S304
        │   COMMAND INFORMATION  │
        └────────────────────────┘
                   │
                   ▼
              ┌──────────┐
              │   END    │
              └──────────┘
```

# EP 3 922 418 A1

**INTERNATIONAL SEARCH REPORT**

International application No.

PCT/JP2019/004710

A. CLASSIFICATION OF SUBJECT MATTER
Int. Cl. B25J19/06(2006.01)i, B25J13/00(2006.01)i

According to International Patent Classification (IPC) or to both national classification and IPC

B. FIELDS SEARCHED

Minimum documentation searched (classification system followed by classification symbols)
Int. Cl. B25J1/00-21/02

Documentation searched other than minimum documentation to the extent that such documents are included in the fields searched
Published examined utility model applications of Japan    1922-1996
Published unexamined utility model applications of Japan   1971-2019
Registered utility model specifications of Japan           1996-2019
Published registered utility model applications of Japan   1994-2019

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2011-502801 A (HONDA MOTOR CO., LTD.) 27 | 1-3, 5-7 |
| Y | January 2011, paragraphs [0012]-[0105], fig. 1-8B & US 2009/0118863 A1, paragraphs [0021]-[0066], fig. 1-8B | 4 |
| Y | JP 2016-512733 A (INTUITIVE SURGICAL OPERATIONS, INC.) 09 May 2016, paragraphs [0024]-[0075], fig. 1-17 & US 2014/0316431 A1, paragraphs [0041]-[0097], fig. 1-17 & CN 105050529 A & KR 10-2015-0126951 A | 4 |

☒  Further documents are listed in the continuation of Box C.      ☐  See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 27.02.2019 | 12.03.2019 |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**

| International application No. |
| --- |
| PCT/JP2019/004710 |

C (Continuation).  DOCUMENTS CONSIDERED TO BE RELEVANT

| Category* | Citation of document, with indication, where appropriate, of the relevant passages | Relevant to claim No. |
| --- | --- | --- |
| X | US 5430643 A (THE UNITED STATES OF AMERICA AS REPRESENTED BY THE ADMINISTRATOR OF THE NATIONAL AERONAUTICS AND SPACE ADMINISTRATION) 04 July 1995, column 6, line 65 to column 18, line 38, fig. 1-12g (Family: none) | 1-2, 5-7 |
| X | JP 7-68480 A (MITSUBISHI HEAVY INDUSTRIES, LTD.) 14 March 1995, paragraphs [0011]-[0034], fig. 1-7 (Family: none) | 1, 6-7 |
| A | JP 2009-226563 A (TOYOTA JIDOSHA KABUSHIKI KAISHA) 08 October 2009, entire text (Family: none) | 3-4 |
| A | JP 2012-11498 A (KABUSHIKI KAISHA TOSHIBA) 19 January 2012, entire text (Family: none) | 2-4 |

Form PCT/ISA/210 (continuation of second sheet) (January 2015)

**EP 3 922 418 A1**

**REFERENCES CITED IN THE DESCRIPTION**

**Patent documents cited in the description**

- JP 2017131990 A

- JP 5261495 B